# EUROPEAN PATENT APPLICATION

(11) **EP 4 835 164 A1**
(43) Date of publication of application: **04.11.2026**
(21) Application number: 25210776.8
(22) Date of filing: 23.10.2025
(51) Int. Cl.: C25D 1/04, C25D 3/38, H01M 4/66, H01M 10/0525

(54) **COPPER FOIL, AND ELECTRODE AND SECONDARY BATTERY INCLUDING THE SAME**

(30) Priority: 30.04.2025 KR 20250057670
(71) Applicant: SK Nexilis Co., Ltd., Jeollabuk-do 56137 (KR)
(72) Inventor: JIN, Shan Hua, 03142 Seoul (KR); LEE, Anna, 03142 Seoul (KR); KIM, Taeyeong, 03142 Seoul (KR); KIM, Jinhyeok, 03142 Seoul (KR); JEONG, Eunseon, 03142 Seoul (KR)
(74) Representative: Prüfer & Partner mbB Patentanwälte · Rechtsanwälte

(57) **Abstract**

Provided are a copper foil and an electrode and secondary battery including the same, the copper foil including a copper layer doped with at least one element selected from nitrogen and sulfur, wherein the copper foil has a welding strength of 50 kgf/mm² to 80 kgf/mm², measured according to Measurement Method 1 below:

[Measurement Method 1]

1) A copper layer stack in which 30 copper layers are stacked is prepared.
2) The copper layer stack and a lead tab are welded according to laser welding conditions below:
- Power: 2,500 W
- Irradiation length: 39 mm
- Irradiation interval: 1 mm
- Irradiation time: 4 ms

3) For the welded part between the copper layer stack and the lead tab, welding strength is measured under conditions of a length of 50 mm, a width of 12.7 mm, and a test speed of 50 mm/min using a universal testing machine from Instron Corp., according to IPC-TM-650 standard.

## Description

### BACKGROUND OF THE DISCLOSURE

### Field of the Disclosure

The present disclosure relates to a copper foil and an electrode and secondary battery including the same.

### Description of the Related Art

A secondary battery, as an energy storage device, is widely used in various applications such as portable devices, electric vehicles, and energy storage systems (ESS). In particular, as high energy density and high power characteristics are simultaneously required, advanced technological development for the structures and constituent materials of electrodes is continuously ongoing.

Generally, a negative electrode is formed by applying a slurry composed of an active material, a binder, and a conductive agent onto a current collector, and then subjecting it to drying and roll-press processes. As the current collector, a copper foil, which has excellent electrical conductivity and is easy to process, is widely used.

Recently, as the demand for higher density and reduced thickness of electrodes has increased, design conditions such as an increase in the coating amount of an active material, an improvement in electrode density, and a reduction in electrode thickness are becoming progressively more advanced. Accordingly, various performance requirements such as mechanical durability, process adaptability, surface precision, and coating uniformity are being simultaneously imposed on copper foil.

In particular, during electrode manufacturing, the copper foil is repeatedly subjected to high-pressure roll press and the active material is repeatedly subjected to a compressive load, which may cause various process-related problems such as reduced mechanical stability, wrinkling, tearing, softening, and the generation of surface defects.

Therefore, as electrode manufacturing conditions become more advanced, research aimed at optimizing multifaceted characteristics of the copper foil, such as its thickness, crystal structure, surface roughness, chemical stability, and residual stress, is being actively conducted.

### SUMMARY OF THE DISCLOSURE

Therefore, the present disclosure has been made in view of the above problems, and it is one object of the present disclosure to provide a copper foil and an electrode and secondary battery including the same, wherein the stability of a welded region between the copper foil and a lead tab is improved, thereby enhancing mechanical properties and battery characteristics.

In accordance with an aspect of the present disclosure, the above and other objects can be accomplished by the provision of a copper foil, including a copper layer doped with at least one element selected from nitrogen and sulfur, wherein the copper foil has a welding strength of 50 kgf/mm² (490.3 N/mm²)to 80 kgf/mm² (784.5 N/mm²), measured according to Measurement Method 1 below:

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part between the copper layer stack and the lead tab, welding strength is measured under conditions of a length of 50 mm, a width of 12.7 mm, and a test speed of 50 mm/min using a universal testing machine from Instron Corp., according to IPC-TM-650 standard.

In an embodiment of the present disclosure, the copper foil may have a welding strength of 75 kgf/mm² (735.5 N/mm²) to 100 kgf/mm² (980.7 N/mm²), measured according to Measurement Method 2 below:

### [Measurement Method 2]

1) A copper layer stack in which 50 copper layers are stacked is prepared.
2) A welding strength is measured according to steps 2) and 3) of Measurement Method 1.

In an embodiment of the present disclosure, a total content of the doping element may be 20 ppm to 80 ppm.

In an embodiment of the present disclosure, a difference between a first tensile strength at room temperature and a second tensile strength after heat treatment at 190 °C for 10 minutes according to the IPC-TM-650 section 2.4.18B standard and conditions may be 6 kgf/mm² (58.8 N/mm²) or less, wherein the first tensile strength is 40 kgf/mm² (392.3 N/mm²) to 70 kgf/mm² (686.5 N/mm²).

In an embodiment of the present disclosure, the copper foil may have a first welding efficiency of 100 % to 140 %, calculated according to Equation 1 below: [Equation 1] $First welding efficiency = \left(Welding strength/First tensile strength\right) \times 100$

In an embodiment of the present disclosure, the copper foil may have a second welding efficiency of 110 % to 160 %, calculated according to Equation 2 below: [Equation 2] $Second welding efficiency = \left(Welding strength/Second tensile strength\right) \times 100$

In an embodiment of the present disclosure, the copper foil has a thickness of 6 µm ± 4 µm, a first elongation at room temperature according to the IPC-TM-650 section 2.4.18B standard and conditions may be 2 % to 15 %, and a second elongation after heat treatment at 190 °C for 10 minutes may be 3 % to 20 %.

In an embodiment of the present disclosure, the copper foil may have a first welding index based on elongation of 7 to 20, calculated according to Equation 3 below: [Equation 3] 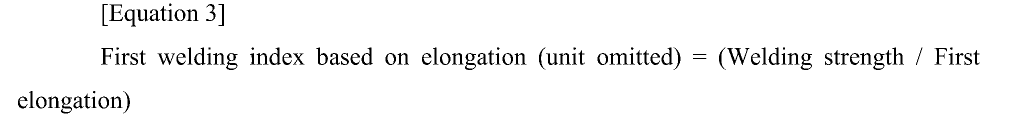 First welding index based on elongation (unit omitted) = (Welding strength / First elongation)

In an embodiment of the present disclosure, the copper foil may have a second welding index based on elongation of 6 to 18, calculated according to Equation 4 below: [Equation 4] 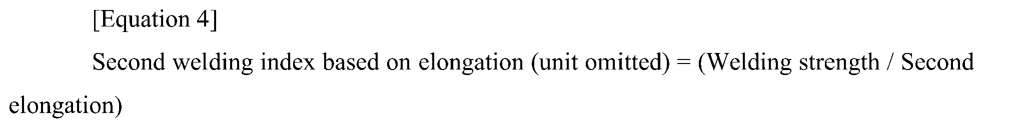 Second welding index based on elongation (unit omitted) = (Welding strength / Second elongation)

In an embodiment of the present disclosure, the copper foil may further include a protective layer formed on at least one surface of the copper layer, wherein the protective layer includes at least one of a chromium compound, a silane compound, and a nitrogen compound.

In accordance with another aspect of the present disclosure, there is provided an electrode, including: a current collector including a copper foil; and an active material layer formed on at least one surface of the current collector, wherein the copper foil includes a copper layer doped with at least one element selected from nitrogen and sulfur, and has a welding strength of 50 kgf/mm² (490.3 N/mm²) to 90 kgf/mm² (784.5 N/mm²), measured according to Measurement Method 1 below:

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part between the copper layer stack and the lead tab, welding strength is measured under conditions of a length of 50 mm, a width of 12.7 mm, a test speed of 50 mm/min, 23 °C ± 3 °C, and 30% to 60 % relative humidity using a universal testing machine from Instron Corp., according to the IPC-TM-650 section 2.4.18B standard.

In accordance with yet another aspect of the present disclosure, there is provided a secondary battery, including: a negative electrode; a positive electrode; an electrolyte; and a separator interposed between the negative electrode and the positive electrode, wherein the negative electrode includes a current collector including a copper foil, wherein the copper foil includes a copper layer doped with at least one element selected from nitrogen and sulfur, and has a welding strength of 50 kgf/mm² (490.3 N/mm²) to 90 kgf/mm² (784.5 N/mm²), measured according to Measurement Method 1 below:

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part between the copper layer stack and the lead tab, welding strength is measured under conditions of a length of 50 mm, a width of 12.7 mm, a test speed of 50 mm/min, 23 °C ± 3 °C, and 30% to 60 % relative humidity using a universal testing machine from Instron Corp., according to the IPC-TM-650 section 2.4.18B standard.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates the sectional view of a copper foil according to an embodiment;
FIG. 2 schematically illustrates the sectional view of a negative electrode according to an embodiment;
FIG. 3 schematically illustrates the sectional view of a secondary battery according to an embodiment; and
FIG. 4 schematically illustrates an apparatus for manufacturing a copper foil according to an embodiment.

### DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the specification, when a certain part "includes" a certain component, this indicates that the part may further include another component instead of excluding another component unless there is no different disclosure. In addition, it should be understood that all numerical ranges representing physical property values, dimensions, etc. of components described in the present specification or application are modified by the term 'about' in all cases unless otherwise specified. Further, in the present specification or application, 'ppm' means on a weight basis. Additionally, in the present specification or application, 'derived' means to indicate a component or structure originating from a certain substance, or the substance itself.

In addition, in the present specification or application, terms such as "below," "beneath," "lower," "above," and "upper" may be used to easily describe the correlation between one element or component and another, as illustrated in the drawings. The spatially relative terms should be understood as terms that include different orientations of a device during use or operation, in addition to the orientation shown in the drawings. For example, when a device shown in the drawings is turned over, a device described as "below" or "beneath" another device may be placed "above" the other device. Accordingly, the exemplary term "below" or "beneath" may encompass both orientations of below and above. Likewise, the exemplary term "above" or "upper" may encompass both orientations of above and below.

Hereinafter, a copper foil according to the present disclosure and an electrode and secondary battery including the copper foil are described.

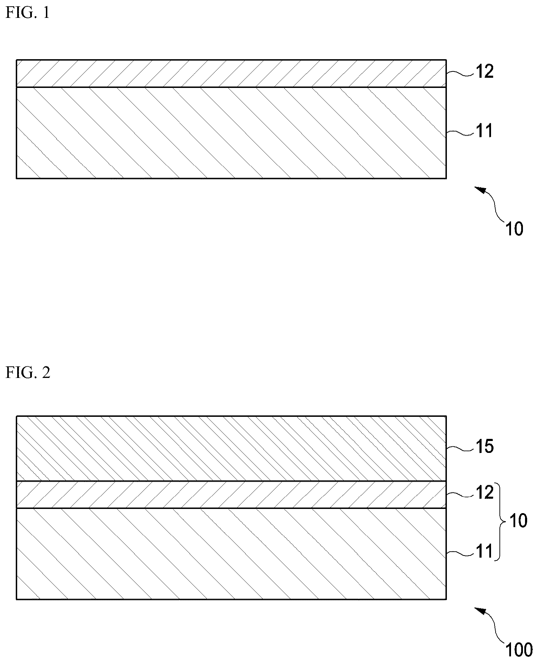

FIG. 1 schematically illustrates the sectional view of a copper foil according to an embodiment.

A copper foil 10 according to the present disclosure may include a copper layer 11. The copper layer 11 may include 99 % by weight or more, 99.3 % by weight or more, 99.6 % by weight or more, or 99.9 % by weight or more of copper (Cu).

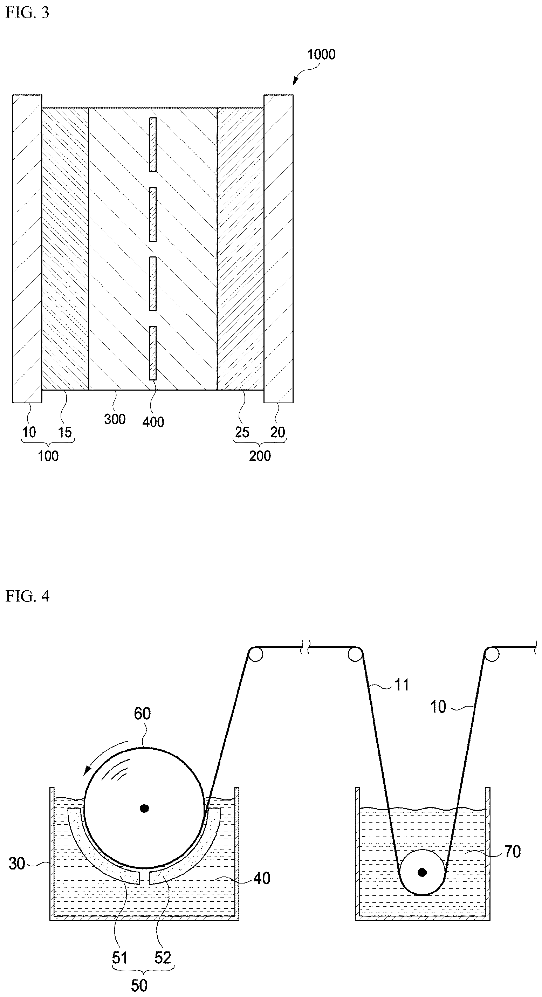

The copper layer 11 may be formed on a rotating cathode drum through electroplating. The copper layer 11 may have a shiny side that is in direct contact with the rotating cathode drum during the electroplating process, and a matte side which is the opposite side. Specifically, the copper layer 11 may be formed by an apparatus for manufacturing a copper foil of FIG. 4, which will be described below.

The copper layer 11 may include a copper layer doped with at least one element selected from nitrogen and sulfur. The doping element may affect the crystal grain growth and stress distribution of the copper layer 11, so that mechanical properties and interfacial stability may be simultaneously improved.

Specifically, the nitrogen element may exist in the form of a coordinate bond on the surface of the copper, so that the refinement of copper crystal grains and the strength of the particles may be improved. As a result, the tensile strength and elongation of the copper foil 10 may be secured in a balanced manner.

The sulfur element may act as an activator for copper crystal grains, so that the local deformation resistance of the copper layer 11 may be improved, and the occurrence of surface damage due to heat concentration during the welding process with a lead tab may be suppressed. As a result, the possibility of cross-sectional defect occurrence during welding of the copper layer stack and the lead tab may be suppressed, and a stable intermetallic joint state may be maintained without an increase in welding resistance.

A total content of the doping element may be 20 ppm to 80 ppm, 25 ppm to 80 ppm, 25 ppm to 77 ppm, or 25 ppm to 75 ppm. When the range is satisfied, the occurrence of defects in the welded cross-section of the copper foil 10 and an increase in welding resistance therein may be suppressed, and the welding strength may be improved.

The doping element may be derived from a component included in an electrolyte solution during a manufacturing process of the copper layer 11 to be described below. The doping element may be identified by Inductively Coupled Plasma Optical Emission Spectrometry (ICP-OES). Alternatively, the doping element may be identified by Time-of-Flight Secondary Ion Mass Spectrometry (ToF-SIMS).

The copper foil 10 may include a protective layer 12 formed on at least one surface of the copper layer 11. The protective layer 12 formed on one surface of the copper layer 11 is illustrated in FIG. 1, but the protective layer 12 may be formed on both surfaces of the copper layer 11.

The protective layer 12 may include at least one of a chromium compound, a silane compound, and a nitrogen compound. The protective layer 12 may prevent the oxidation and corrosion of the copper layer 11 and improve heat resistance thereof, thereby extending the lifespan of the copper foil 10 and the lifespan of a product including the copper foil 10.

The copper foil 10 may have a welding strength of 50 kgf/mm² (490.3N/mm²) to 80 kgf/mm² (784.5N/mm²) according to Measurement Method 1 below:

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part of the copper layer stack and the lead tab, welding strength is measured under the conditions of a length of 50 mm, a width of 12.7 mm, a test speed of 50 mm/min, 23 °C ± 3 °C, and 30% to 60 % relative humidity using a universal testing machine from Instron Corp., according to the IPC-TM-650 section 2.4.18B standard.

The welding strength may be an indicator of the interfacial bonding reliability between the copper layer stack and the lead tab. The welding strength may be an indicator of the durability against mechanical impact of an electrode including the copper foil 10. The welding strength may be an indicator of the interfacial bonding stability against mechanical stress that may be generated during the manufacturing process of a secondary battery. The welding strength may be an indicator of the suppression of interfacial electrical resistance increase and the structural stability according to repeated charge/discharge cycles of a secondary battery.

The welding strength may be controlled by factors such as whether a doping element is included on the copper layer 11, the content of the doping element, or, in the manufacturing process of the copper foil to be described below, the composition of the electrolyte solution, the content of each component, and the process conditions.

The welding strength according to Measurement Method 1 may be 490.3N/mm²(50 kgf/mm²) to 784.5N/mm²(80 kgf/mm²), 539.4N/mm²(55 kgf/mm²) to 784.5N/mm²(80 kgf/mm²), 539.4N/mm²(55 kgf/mm²) to 735.5N/mm²(75 kgf/mm²), or 539.4N/mm²(55 kgf/mm²) to 686.5N/mm²(70 kgf/mm²).

In addition, the welding strength of the copper foil 10 according to Measurement Method 2 below may be 735.5N/mm²(75 kgf/mm²) to 980.7N/mm²(100 kgf/mm²), 755.1N/mm²(77 kgf/mm²) to 980.7N/mm²(100 kgf/mm²), 784.5N/mm²(80 kgf/mm²) to 980.7N/mm²(100 kgf/mm²), or 784.5N/mm²(80 kgf/mm²) to 931.6N/mm²(95 kgf/mm²).

### [Measurement Method 2]

1) A copper layer stack in which 50 copper layers are stacked is prepared.
2) The welding strength is measured according to steps 2) and 3) of Measurement Method 1.

When the range is satisfied, the bonding reliability and durability of the welded part between the copper layer stack and the lead tab may be improved, so that the structural stability of an electrode terminal part may be maintained even under repeated charge/discharge conditions.

In the copper foil 10, a difference between a first tensile strength at room temperature and a second tensile strength after heat treatment at 190 °C for 10 minutes according to the IPC-TM-650 section 2.4.18B standard and conditions may be 58.8N/mm²(6 kgf/mm²) or less, and the first tensile strength may be 392.3N/mm²(40 kgf/mm²) to 686.5N/mm²(70 kgf/mm²).

In the copper foil 10, a difference between a first tensile strength at room temperature and a second tensile strength after heat treatment at 190 °C for 10 minutes according to the IPC-TM-650 section 2.4.18B standard and conditions may be 39.2N/mm²(4 kgf/mm²) or less, and the first tensile strength may be 490.3N/mm²(50 kgf/mm²) to 686.5N/mm²(70 kgf/mm²).

In the copper foil 10, a difference between a first tensile strength at room temperature and a second tensile strength after heat treatment at 190 °C for 10 minutes according to the IPC-TM-650 section 2.4.18B standard and conditions may be 19.6N/mm²(2 kgf/mm²) or less, and the first tensile strength may be 490.3N/mm²(50 kgf/mm²) to 637.4N/mm²(65 kgf/mm²).

When the range is satisfied, the copper foil 10 may maintain a tensile strength of 85% or more compared to that at room temperature even after the heat treatment, so that phenomena such as peeling, warping, or fracture that may occur during the manufacturing process may be suppressed. In addition, the precision of electrode stacking may be improved, and the long-term stability of the electrode structure may be secured.

The copper foil 10 may have a first welding efficiency of 100 % to 140 % according to Equation 1 below: [Equation 1] $First welding efficiency = \left(Welding strength/First tensile strength\right) \times 100$

The copper foil 10 may have a second welding efficiency of 110 % to 160 % according to Equation 2 below: [Equation 2] $Second welding efficiency = \left(Welding strength/Second tensile strength\right) \times 100$

The first welding efficiency may be an indicator of the interfacial bonding quality between the copper foil 10 and the lead tab and their mechanical reliability at a room-temperature state. The second welding efficiency may be an indicator of the interfacial bonding stability between the copper foil 10 and the lead tab under a high-temperature environment and the heat-resistant reliability of the welded part.

The first welding efficiency may be 100 % to 140 %, 105 % to 140 %, 105 % to 138 %, or 105 % to 135 %.

The second welding efficiency may be 110 % to 160 %, 110 % to 155 %, 110 % to 152 %, or 110 % to 150 %.

When the range is satisfied, the welded part between the copper foil 10 and the lead tab may be stably maintained in room-temperature and high-temperature environments, so that the mechanical stability of the electrode structure including the copper foil 10 may be secured.

When the thickness of the copper foil 10 is 6 µm ± 4 µm, a first elongation at room temperature according to the IPC-TM-650 section 2.4.18B standard and conditions may be 2% to 15%, and a second elongation after heat treatment at 190 °C for 10 minutes may be 3% to 20%.

When the thickness of the copper foil 10 is 6 µm ± 4 µm, the first elongation at room temperature according to the IPC-TM-650 section 2.4.18B standard and conditions may be 3 % to 15 %, and the second elongation after heat treatment at 190 °C for 10 minutes may be 4 % to 20%.

When the thickness of the copper foil 10 is 6 µm ± 4 µm, the first elongation at room temperature according to the IPC-TM-650 section 2.4.18B standard and conditions may be 3 % to 12 %, and the second elongation after heat treatment at 190 °C for 10 minutes may be 4 % to 18 %.

When the range is satisfied, cracking or fracture of the copper foil 10 may be suppressed even under the room-temperature conditions in which a secondary battery including the copper foil 10 operates and the high-temperature conditions in which an electrode is manufactured from the copper foil 10.

A first welding index based on elongation of the copper foil 10 according to Equation 3 below may be 7 to 20: [Equation 3] 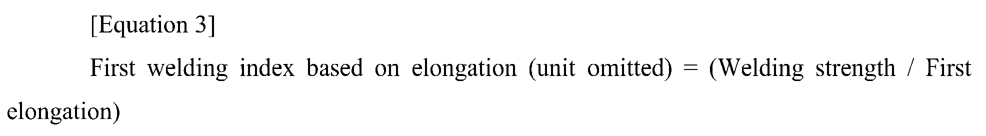 First welding index based on elongation (unit omitted) = (Welding strength / First elongation)

A second welding index based on elongation of the copper foil 10 according to Equation 4 below may be 6 to 18: [Equation 4] 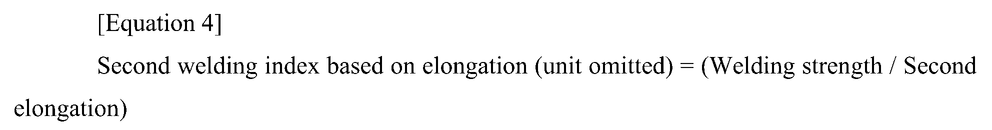 Second welding index based on elongation (unit omitted) = (Welding strength / Second elongation)

The first welding index based on elongation may be an indicator of the interfacial bonding quality between the copper foil 10 and the lead tab and their stress dispersion efficiency at a room temperature state. The second welding index based on elongation may be an indicator of the interfacial stability between the copper foil 10 and the lead tab and their durability at a high temperature state.

The first welding index based on elongation may be 7 to 20, 7.6 to 20, 7.6 to 19, or 13 to 19.

The second welding index based on elongation may be 6 to 18, 6.5 to 18, 6.5 to 17.5, or 14 to 17.5.

When the range is satisfied, the welded part between the copper foil 10 and the lead tab may be stably maintained in room-temperature and high-temperature environments, so that the mechanical stability of an electrode structure including the copper foil 10 may be secured.

FIG. 2 schematically illustrates the sectional view of a negative electrode according to an embodiment.

An electrode according to the present disclosure may include a current collector including the copper foil 10; and an active material layer formed on at least one surface of the current collector.

The electrode may be a negative electrode 100. The active material layer may be a negative electrode active material layer 15.

The copper foil 10 may include the copper layer 11 doped with at least one element selected from nitrogen and sulfur, and the welding strength according to Measurement Method 1 below may be 490.3N/mm²(50 kgf/mm²) to 784.5N/mm²(80 kgf/mm²).

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part between the copper layer stack and the lead tab, welding strength is measured under the conditions of a length of 50 mm, a width of 12.7 mm, a test speed of 50 mm/min, 23 °C ± 3 °C, and 30% to 60 % relative humidity using a universal testing machine from Instron Corp., according to the IPC-TM-650 section 2.4.18B standard.

The copper foil 10 may include a protective layer 12 formed on at least one surface of the copper layer 11. The copper foil, the copper layer, the protective layer, and the welding strength according to Measurement Method 1 may be the same as the copper foil, the copper layer, the protective layer, and the welding strength according to Measurement Method 1 described above.

In FIG. 2, the protective layer 12 and negative electrode active material layer 15 formed on one surface of the copper layer 11 are illustrated, but the protective layer 12 and the negative electrode active material layer 15 may be formed on both surfaces of the copper layer 11.

A ratio of the thickness of the current collector to the total thickness of the electrode may be 1 % to 12 %, 3 % to 12 %, 5 % to 12 %, or 6 % to 12 %. When the range is satisfied, the mechanical support of the negative electrode active material layer 15 may be maintained, and the energy density may be improved.

The negative electrode active material layer 15 may include a negative electrode active material.

The type of the negative electrode active material is not particularly limited, and a compound capable of reversible intercalation and deintercalation of lithium may typically be used. For example, carbonaceous materials such as artificial graphite, natural graphite, graphitized carbon fiber, amorphous carbon, and highly crystalline carbon; or metallic compounds capable of alloying with lithium such as Si, Al, Sn, Pb, Zn, Bi, In, Mg, Ga, Cd, a Si alloy, a Sn alloy, or an Al alloy may be used. Examples of low-crystalline carbon may include soft carbon and hard carbon, and examples of high-crystalline carbon may include high-temperature fired carbons such as natural graphite, kish graphite, pyrolytic carbon, mesophase pitch based carbon fiber, meso-carbon microbeads, mesophase pitches, and petroleum or coal tar pitch derived cokes. As the negative electrode active material, a composite including a metallic compound and a carbonaceous material may be used as needed.

The negative electrode active material may be mixed with a binder and a conductive agent to be formed as the negative electrode active material layer 15.

The binder may improve the binding force between the negative electrode active material and a conductive agent, and may improve the binding force between the negative electrode active material layer 15 and the copper foil 10.

The type of binder is not particularly limited, but for example, polyvinylidene fluoride (PVDF), polytetrafluoroethylene (PTFE), fluorine rubber, styrene-butadiene rubber (SBR), cellulose-based resin, and the like may be used.

The conductive agent may improve the conductivity of the negative electrode active material. The type of conductive agent is not particularly limited, but for example, Super-P, graphite, acetylene black, and the like may be used.

The electrode may include a primer layer disposed between the copper foil 10 and the negative electrode active material layer 15.

The primer layer may improve the interfacial adhesion between the copper foil 10 and the negative electrode active material layer 15.

The primer layer may include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

The primer layer may include a binder. The binder may include at least one selected from the group consisting of styrene-butadiene rubber, polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorine rubber, styrene (styrene monomer: SM), butadiene (BD), and butyl acrylate (BA).

The primer layer may include at least one conductive agent selected from the group consisting of natural graphite, artificial graphite, carbon black, acetylene black, Ketjen black, channel black, furnace black, lamp black, thermal black, carbon fiber, metal fiber, fluorocarbon, aluminum powder, nickel powder, zinc oxide, potassium titanate, titanium oxide, and polyphenylene derivatives to improve conductivity.

FIG. 3 schematically illustrates the sectional view of a secondary battery according to an embodiment.

A secondary battery 1000 according to the present disclosure includes a negative electrode 100, a positive electrode 200, an electrolyte 300, and a separator 400 interposed between the negative electrode 100 and the positive electrode 200, wherein the negative electrode 100 includes a current collector including the copper foil 10, the copper foil 10 includes a copper layer doped with at least one element selected from nitrogen and sulfur, and a welding strength according to Measurement Method 1 below is 490.3N/mm²(50 kgf/mm²) to 784.5N/mm²(80 kgf/mm²)..

### [Measurement Method 1]

1) A copper layer stack in which 30 copper layers are stacked is prepared.
2) The copper layer stack and a lead tab are welded according to laser welding conditions below:
   - Power: 2,500 W
   - Irradiation length: 39 mm
   - Irradiation interval: 1 mm
   - Irradiation time: 4 ms
3) For the welded part between the copper layer stack and the lead tab, welding strength is measured under the conditions of a length of 50 mm, a width of 12.7 mm, a test speed of 50 mm/min, 23 °C ± 3 °C, and 30% to 60 % relative humidity using a universal testing machine from Instron Corp., according to the IPC-TM-650 section 2.4.18B standard.

The negative electrode 100 and the welding strength according to Measurement Method 1 may be the same as the negative electrode and the welding strength according to Measurement Method 1 described above.

The positive electrode 200 may include a structure in which a positive electrode active material layer 25 is formed on a positive electrode current collector 20.

The positive electrode 200 may be manufactured by a general method known in the art. For example, the positive electrode 200 may be manufactured by preparing a slurry by mixing and stirring a positive electrode active material, a solvent, a binder, a conductive agent, and a dispersant, and then applying the slurry onto the positive electrode current collector 20, compressing, and drying.

The positive electrode current collector 20 is a metal with high conductivity and is not particularly limited as long as it is a metal to which the slurry of the positive electrode active material can easily adhere and which has high conductivity without causing a chemical change in the secondary battery. For example, stainless steel, aluminum, nickel, titanium, sintered carbon, or a surface-treated material thereof with carbon, nickel, titanium, silver, or the like on the surface of aluminum or stainless steel may be used. In addition, fine irregularities may be formed on the surface of the positive electrode current collector to increase the adhesion of the positive electrode active material. The positive electrode current collector 20 may be used in various forms such as a film, a sheet, a foil, a net, a porous body, a foam, and a non-woven fabric body, and may have a thickness of 3 µm to 500 µm.

The positive electrode active material is a compound capable of reversible intercalation and deintercalation of lithium, and specifically, may include a lithium composite metal oxide including lithium and at least one metal such as cobalt, manganese, nickel, or aluminum.

The electrolyte 300 may be a non-aqueous electrolyte. The electrolyte 300 may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

The separator 400 may be configured to prevent an electrical short circuit between the negative electrode 100 and the positive electrode 200 and to allow a flow of ions. The separator 400 may include a porous polymer film or a porous non-woven fabric. Here, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the present disclosure is not limited thereto, and according to an embodiment, the separator may be a high-heat-resistance separator including ceramic (CCS; Ceramic Coated Separator).

A contact angle between the negative electrode 100 and the electrolyte 300 may be 50° or less, 45° or less, 40° or less, or 10° to 50°. The contact angle may be measured according to ASTM D7334. When the range is satisfied, the surface wettability of the negative electrode 100 is excellent, so that the uniformity of a Solid Electrolyte Interphase (SEI) layer may be improved, and the initial power characteristics and life stability of the secondary battery 1000 may be improved.

FIG. 4 schematically illustrates an apparatus for manufacturing a copper foil according to an embodiment.

The copper foil 10 according to the present disclosure may be manufactured by the apparatus for manufacturing a copper foil.

The method of manufacturing the copper foil 10 may include a step of forming the copper layer 11 and a step of forming a protective layer 12 on the copper layer 11.

The apparatus for manufacturing the copper foil 10 may include an electrolytic bath 30 for containing an electrolyte solution 40, a positive electrode plate 50 including a first positive electrode plate 51 and a second positive electrode plate 52, and a rotating cathode drum 60.

The first positive electrode plate 51 and the second positive electrode plate 52 may be electrically insulated from each other.

The formation of the copper layer 11 may be carried out by forming a seed layer through energization between the first positive electrode plate 51 and the rotating cathode drum 60, and growing the seed layer through energization between the second positive electrode plate 52 and the rotating cathode drum 60.

A current density provided by each of the first positive electrode plate 51 and the second positive electrode plate 52 may be 40 ASD to 130 ASD, 45 ASD to 130 ASD, 45 ASD to 125 ASD, or 45 ASD to 120 ASD. When the range is satisfied, the formation of the negative electrode active material layer 15 on the copper foil 10 may be smoothly performed, and sufficient adhesive force may be imparted between the copper foil 10 and the negative electrode active material layer 15.

The surface characteristics of the copper layer 11 may be controlled according to the degree of surface buffing or polishing of the rotating cathode drum 60. For example, the surface of the rotating cathode drum 60 may be polished with a polishing brush having a grit of #800 to #3000.

During the formation process of the copper layer 11, the temperature of the electrolyte solution 40 may be maintained at 45 °C to 65 °C, 47 °C to 65 °C, 47 °C to 63 °C, or 47 °C to 60 °C. Depending on the temperature of the electrolyte solution 40, the size, crystal orientation, and electrodeposition rate of copper crystal grains may vary, and thereby mechanical properties and surface roughness may be controlled.

The electrolyte solution 40 may include copper ions, an inorganic acid, and an additive. The electrolyte solution 40 may include chlorine. The inorganic acid may include sulfuric acid.

The content of the copper ions in the electrolyte solution 40 may be 70 g/L to 150 g/L, 70 g/L to 110 g/L, 70 g/L to 100 g/L, or 70 g/L to 90 g/L.

The copper ions contained in the electrolyte solution 40 may be from a copper wire with a purity of 99.9% or more, which is pickled in 10% sulfuric acid for 10 to 20 minutes and then undergoes a water washing process with distilled water. The water washing process may prevent the pickled organic matter from entering the electrolyte solution 40. The concentration of the organic matter may be controlled by a filtration process using a medium such as diatomaceous earth or carbon.

The content of the sulfuric acid in the electrolyte solution 40 may be 80 to 130 g/L, 85 to 130 g/L, 90 to 130 g/L, or 90 to 125 g/L. The sulfur content doped in the copper layer 11 may be controlled according to the content of the sulfuric acid.

The chlorine may include chlorine ions and chlorine atoms. The chlorine may be used to remove silver (Ag) ions that have entered the electrolyte solution 40 during the process of forming the copper layer 11. The chlorine may precipitate the silver ions in the form of silver chloride (AgCl). The silver chloride may be removed by filtration.

The concentration of the chlorine may be 15 ppm to 30 ppm. When the range is satisfied, the removal of silver ions may be smoothly performed, and unnecessary reactions due to excess chlorine may be suppressed.

The additive may include a first additive that can impart surface gloss, stress reduction, and leveling functions to the copper layer 11.

By the first additive, the amount of charge in the electrolyte solution 40 may be increased to increase the electrodeposition rate of copper ions, the curl characteristics of the manufactured copper foil 10 may be improved, and the gloss of the copper foil 10 may be enhanced.

The concentration of the first additive may be 1 ppm to 20 ppm, 2 ppm to 20 ppm, 3 ppm to 20 ppm, or 3 ppm to 18 ppm. When the range is satisfied, the surface roughness of the manufactured copper foil 10 may be maintained, and the gloss may be improved. The sulfur content doped in the copper layer 11 may be controlled depending upon the content of the first additive.

The first additive may include sulfonic acid or a metal salt thereof.

The first additive may include at least one of bis-(3-sulfopropyl)-disulfide disodium salt, diethylenetriaminepenta(methylenesulfonic acid), 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The additive may include a second additive that can provide functions of relaxing the deposition rate of the copper layer 11 and improving the uniformity thereof.

The second additive may prevent a sharp increase in roughness of the copper layer 11 and a decrease in strength thereof.

The concentration of the second additive may be 0.1 ppm to 10 ppm, 0.2 ppm to 10 ppm, 0.3 ppm to 10 ppm, or 0.5 ppm to 10 ppm. When the range is satisfied, the manufactured copper foil 10 may be prevented from being wrinkled and torn, and appearance, gloss, strength, and elongation properties may be maintained.

The second additive may include a non-ionic water-soluble polymer.

The second additive may include at least one of hydroxyethyl cellulose, hydroxypropyl cellulose, ethyl cellulose, carboxymethyl cellulose, hydroxypropyl methyl cellulose, methyl cellulose, polyethylene glycol, polyvinyl alcohol, polypropylene glycol, polyacrylamide, polyoxyethylene, polyvinylpyrrolidone, polyethylene-polypropylene copolymers, polyglycerin, polyethylene glycol dimethyl ether, stearic acid polyglycol ether, and stearyl alcohol polyglycol ether.

The additive may include a third additive that can prevent clogging of electrodeposition in a fine pattern of the copper layer 11, so that flatness can be maintained.

By the third additive, electrodeposition may be suppressed in a region where the local current density of the copper layer 11 is high, whereby a leveling action of making the surface of the copper layer 11 flat may be performed.

The concentration of the third additive may be 1 ppm to 10 ppm, 1 ppm to 9.5 ppm, or 1 ppm to 9 ppm. When the range is satisfied, the surface gloss of the manufactured copper foil 10 is uniform, and a phenomenon in which the surface roughness sharply increases may be suppressed. The sulfur content and/or nitrogen content doped in the copper layer 11 may be controlled according to the content of the third additive.

The third additive may include at least one of thiourea, thiourea derivatives, diethylenethiourea, ethylenethiourea, polyethylenimine, and 2-thiazoline-2-thiol.

The additive may include a nitrogen-containing heterocyclic quaternary ammonium salt or a derivative thereof.

The nitrogen-containing heterocyclic quaternary ammonium salt or a derivative thereof may include at least one of compounds represented by Formulas 1 to 5 below:

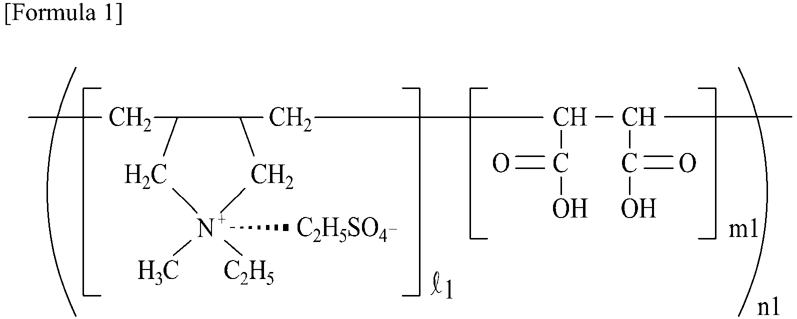

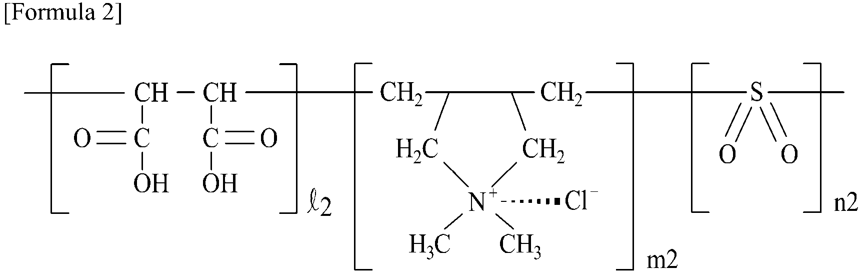

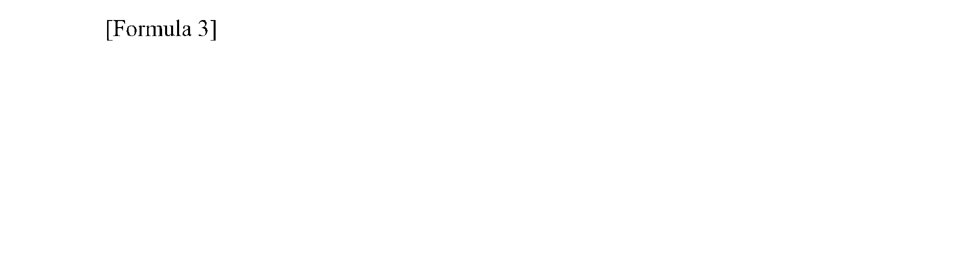

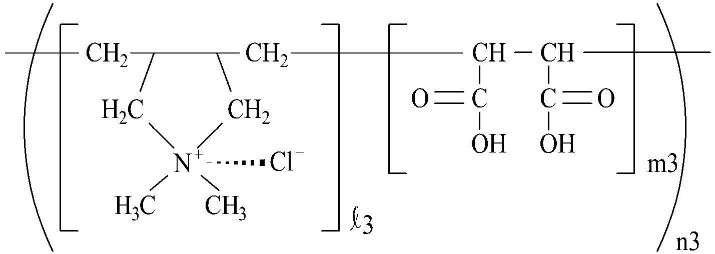

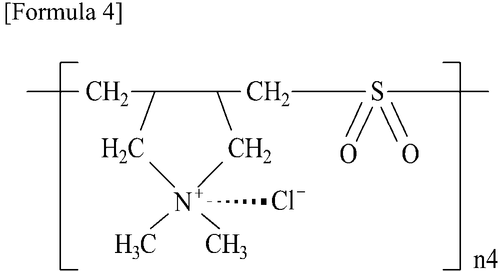

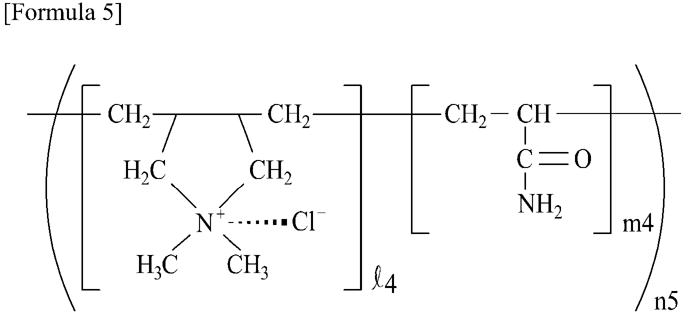

In Formulas 1 to 5, ℓ1 to ℓ4, m1 to m4, and n1 to n5 each represent a repeating unit, are integers of 1 or more, and may be the same as or different from each other.

Each of the compounds represented by Formulas 1 to 5 may have a number average molecular weight of 500 g/mol to 12,000 g/mol. When the range is satisfied, an increase in the deviation of surface roughness may be suppressed, so that the glossiness and flatness of the copper layer 11 may be improved.

The compounds represented by Formulas 1 to 5 may be prepared by polymerization or copolymerization using Diallyl Dimethyl Ammonium Chloride (DDAC). The compound represented by Formula 1 may be PAS-2451 (Mw 30,000 g/mol, from Nittobo). The compound represented by Formula 2 may be PAS-84 (Mw 20,000 g/mol, from Nittobo). The compound represented by Formula 3 may be PAS-2351 (Mw 25,000 g/mol, from Nittobo). The compound represented by Formula 4 may be PAS-A-1 (Mw 5,000 g/mol, from Nittobo), or PAS-A-5 (Mw 4,000 g/mol, from Nittobo). The compound represented by Formula 5 may be PAS-J-81 (Mw 180,000 g/mol, from Nittobo).

The additive may include a fourth additive for controlling the growth direction and refining particles of the copper layer 11.

By the fourth additive, microcrystallines of the copper layer 11 may be induced, and surface flattening and thermal stability may be enhanced.

The concentration of the fourth additive may be 0.5 ppm to 20 ppm, 1 ppm to 20 ppm, 2 ppm to 20 ppm, or 3 ppm to 20 ppm. When the range is satisfied, the thermal stability and surface flattening of the copper layer 11 may be improved, and the tensile strength may be improved.

The fourth additive may include a protein derivative. The protein derivative may include at least one of collagen, collagen peptide, and gelatin.

The protein derivative may have a weight average molecular weight of 1,000 g/mol to 10,000 g/mol. When the range is satisfied, the surface flattening of the copper layer 11 may be improved, and the generation of bubbles and voids on the surface of the copper layer 11 due to an increase in the viscosity of the electrolyte solution 40 may be suppressed.

The protein derivative may include an α-helix structure and a β-sheet structure. The α-helix structure enables stable adsorption with copper ions due to strong hydrogen bonding, and the current distribution may become uniform according to the layered structure. The β-sheet structure, as an average structure, allows for wide surface area coverage, forms a porous network, and enables the selective permeation of ions and large crystallization.

A ratio of the α-helix structure to the β-sheet structure may be 7:3 to 3:7, 6.5:3.5 to 3:7, 6.5:3.5 to 3.5:6.5, or 6:4 to 4:6. When the range is satisfied, side reactions with chloride ions may be suppressed to improve current efficiency, and an increase in the void generation rate due to the accumulation of the β-sheet structure may be prevented.

The content of hydrogen peroxide (H₂O₂) in the electrolyte solution 40 may be 1 ml/L to 10 ml/L, 1 ml/L to 9.5 ml/L, 1 ml/L to 9.2 ml/L, or 1 ml/L to 9 ml/L.

The concentration of silver (Ag) in the electrolyte solution 40 may be 0.1 ppm to 10 ppm, 0.1 ppm to 9.5 ppm, 0.1 ppm to 9 ppm, or 0.1 ppm to 8 ppm.

The concentration of cerium (Ce) in the electrolyte solution 40 may be 2 ppm to 10 ppm, 2 ppm to 9.5 ppm, 2 ppm to 9 ppm, or 2 ppm to 8 ppm.

The concentration of lead (Pb) in the electrolyte solution 40 may be 1 ppm to 20 ppm, 1 ppm to 19 ppm, 1 ppm to 18 ppm, or 1 ppm to 15 ppm.

The concentration of molybdenum (Mo) in the electrolyte solution 40 may be 25 ppm or less, 20 ppm or less, 15 ppm or less, or 0.1 ppm to 25 ppm.

The concentration of nickel (Ni) in the electrolyte solution 40 may be 15 ppm to 150 ppm, 15 ppm to 130 ppm, 15 ppm to 120 ppm, or 15 ppm to 100 ppm.

The concentration of tungsten (W) in the electrolyte solution 40 may be 0.3 ppm to 5 ppm, 0.3 ppm to 4.5 ppm, 0.3 ppm to 4.2 ppm, or 0.3 ppm to 4 ppm.

The concentration of cobalt (Co) in the electrolyte solution 40 may be 330 ppm or less, 320 ppm or less, 300 ppm or less, or 100 ppm to 330 ppm.

The concentration of iron (Fe) in the electrolyte solution 40 may be 300 ppm or less, 280 ppm or less, 250 ppm or less, or 0.1 ppm to 300 ppm.

The concentration of arsenic (As) in the electrolyte solution 40 may be 0.5 ppm to 5 ppm, 0.5 ppm to 4.5 ppm, 0.5 ppm to 4.2 ppm, or 0.5 ppm to 4 ppm.

The concentrations of silver, cerium, lead, molybdenum, nickel, tungsten, cobalt, iron, and arsenic described above include all atoms present in ions and molecules.

When the range is satisfied, the microstructure at the surface and interface of the copper foil 10 may be uniformly maintained through active control of the crystal grains of the copper foil 10. Accordingly, stress concentration at the welded interface between the copper foil 10 and the lead tab may be suppressed, so that defects that may occur during welding may be prevented, and deterioration of welding strength may be suppressed. As a result, the welding strength of 490.3 N/mm²(50 kgf/mm²) to 784.5 N/mm²(80 kgf/mm²) according to Measurement Method 1 described above may be satisfied.

When forming the copper layer 11, the flow rate of the electrolyte solution 40 supplied into the electrolytic bath 30 may be 35 m³/hour to 46 m³/hour, 37 m³/hour to 46 m³/hour, 39 m³/hour to 46 m³/hour, or 41 m³/hour to 45 m³/hour. When the range is satisfied, the electrolyte solution 40 is filtered during the circulation process of the electrolyte solution 40, so that solid impurities present in the electrolyte solution 40 may be removed while electroplating for forming the copper layer 11 is being performed.

A flow rate deviation of the electrolyte solution 40 may be controlled to be 5% or less, 4% or less, 3% or less, or 2% or less per unit time (second). When the range is satisfied, the copper layer 11 may be uniformly formed, and the weight deviation of the manufactured copper foil 10 may be minimized.

To remove impurities from the surface of the copper layer 11, water washing may be performed in a washing tank. To remove impurities from the surface of the copper layer 11, acid cleaning may be performed, and then water cleaning may be performed to remove the acidic solution used for the acid cleaning.

The method of manufacturing the copper foil 10 may include a step of forming a protective layer 12 on the copper layer 11. The copper layer 11 may be immersed in an anticorrosion solution 70. The copper layer 11 may be guided by a guide roll disposed in the anticorrosion solution 70 when being immersed in the anticorrosion solution 70.

The anticorrosion solution 70 may include at least one of a chromium compound, a silane compound, and a nitrogen compound. When forming the protective layer 12 on the copper layer 11, a method of immersing the copper layer 11 in a potassium dichromate solution of 1 g/L to 10 g/L at room temperature for 1 to 30 seconds may be performed. The protective layer 12 may include a silane compound by silane treatment, and may include a nitrogen compound by nitrogen treatment. The copper foil 10 may be manufactured by forming the protective layer 12.

Hereinafter, the present disclosure is described in more detail based on Examples and Comparative Examples. However, the following Examples and Comparative Examples are only examples for explaining the present disclosure in more detail, and the present disclosure is not limited by the following Examples and Comparative Examples.

### Examples

### Example 1

A copper foil was manufactured using a foil-making machine including an electrolytic bath 30, a rotating cathode drum 60 disposed in the electrolytic bath 30, and a positive electrode plate 50 disposed apart from the rotating cathode drum 60.

The electrolyte solution 40 was a copper sulfate solution, wherein the concentration of copper ions in the electrolyte solution 40 was set to 87 g/L and the concentration of sulfuric acid was 98 g/L, and the temperature of the electrolyte solution 40 was set to 55 °C and the current density was set to 60 ASD (A/dm²). In addition, the concentration of chlorine (Cl) included in the electrolyte solution 40 was maintained at 20 ppm.

10 ppm of bis-(3-sulfopropyl)-disulfide disodium salt (SPS), 5 ppm of polyethylene glycol (PEG), 1 ppm of diethylenethiourea (DETU), and 1 ppm of polyethylenimine (PEI) were contained in the electrolyte solution 40.

A current was applied between the rotating cathode drum 60 and the positive electrode plate 50 at a current density of 60 ASD to manufacture the copper layer 11. Next, the copper layer 11 was immersed in an anticorrosion solution 70 for about 2 seconds. The anticorrosion solution 70 contained chromic acid as a main component, and the concentration of the chromic acid was 5 g/L.

Next, a protective layer was formed by performing chromate treatment on both surfaces of the copper layer 11, thereby manufacturing the copper foil 10 having a thickness of 6 µm.

### Examples 2 and 3 and Comparative Examples 1 to 3

Copper foils were manufactured under the same process conditions as in Example 1, except that main compositions of each electrolyte solution and the content of each composition were applied as described in Table 1 below.

**[Table 1]**

| Classification | Sulfuric acid (g/L) | SPS (ppm) | PEG (ppm) | DETU (ppm) | PEI (ppm) | ETU¹⁾ (ppm) | TTZ²⁾ (ppm) |
|---|---|---|---|---|---|---|---|
| Example 1 | 98 | 10 | 5 | 1 | 1 | - | - |
| Example 2 | 95 | 10 | 5 | - | - | 1 | 1 |
| Example 3 | 87 | 10 | 5 | 1 | - | - | 1 |
| Comparative Example 1 | 95 | 10 | 5 | 0.1 | - | - | - |
| Comparative Example 2 | 92 | 2 | 5 | - | - | 0.1 | - |
| Comparative Example 3 | 95 | 20 | 5 | - | 5 | - | 5 |
| 1) ETU: Ethylene thiourea | | | | | | | |
| 2) TTZ: 2-Thiazoline-2-thiol | | | | | | | |

### Experimental examples

### Experimental Example 1 - Doping element evaluation

Samples of each copper foil manufactured in Examples 1 to 3 and Comparative Examples 1 to 3 were prepared. An Inductively Coupled Plasma Optical Emission Spectrometry (ICP-OES) analysis was performed on each sample. In the analysis, a quantitative evaluation for each of nitrogen and/or sulfur elements was performed on the surface of the solid-phase sample. The evaluation was conducted according to the following criteria, and the results are shown in Table 2 below.
- Excessive: The content of nitrogen and sulfur elements is more than 80 ppm.
- Appropriate: The content of nitrogen and sulfur elements is 20 ppm to 80 ppm.
- Small: The content of nitrogen and sulfur elements is less than 20 ppm.

### Experimental Example 2 - Welding strength

Each sample manufactured in Experimental Example 1 was prepared. After stacking 30 samples, ultrasonic welding was performed under the following conditions to prepare a copper layer stack.
- Model: US-3620SLS
- Horn: Diamond knurling 1mm pitch
- Anivl: T200911YR-H-0.1
- Welding area: 45 mm x 6 mm
- Weld energy: 1,000 J

Next, the copper layer stack and a lead tab were laser-welded under the following conditions.
- Lead tab: Copper lead tab (45 mm x 43 mm)
- Model: AMB 4000
- Scanner: LWS-300
- Power: 2,500 W
- Irradiation length: 39 mm
- Irradiation interval: 1 mm
- Irradiation time: 4 ms

Next, for the welded part of the copper layer stack and the lead tab, welding strength was measured under the conditions of a length of 50 mm, a width of 12.7 mm, a test speed of 50 mm/min, 23 °C ± 3 °C, and 30% to 60 % relative humidity using a universal testing machine from Instron Corp. according to the IPC-TM-650 section 2.4.18B standard. The results are shown in Table 2 below.

Separately, after stacking 50 samples, the welding strength was measured by the same method and under the same conditions, and the results are shown in Table 2 below.

### Experimental Example 3 - Tensile strength and elongation

For each sample prepared in Experimental Example 1, the first tensile strength and first elongation at room temperature were measured under the conditions of a length of 50 mm, a width of 12.7 mm, a test speed of 50 mm/min, , 23 °C + 3 °C, and 30% to 60 % relative humidity using a universal testing machine from Instron Corp. according to the IPC-TM-650 section 2.4.18B standard. Separately, after each sample was heat-treated at 190 °C for 10 minutes, the second tensile strength and the second elongation were measured according to the same measurement method, and the results are shown in Table 2 below.

### Experimental Example 4 - Welding efficiency

For the welding strength, the first tensile strength, and the second tensile strength measured in Experimental Examples 2 and 3, the welding efficiency was calculated according to Equations 1 and 2 below, and the results are shown in Table 2 below: [Equation 1] $First welding efficiency = \left(Welding strength/First tensile strength\right) \times 100$ [Equation 2] $Second welding efficiency = \left(Welding strength/Second tensile strength\right) \times 100$

Here, the welding strength in Equations 1 and 2 is based on a 30-stack standard.

### Experimental Example 5 - Welding index based on elongation

For the welding strength, the first elongation, and the second elongation measured in Experimental Examples 2 and 3, the welding index based on elongation was calculated according to Equations 3 and 4 below, and the results are shown in Table 2 below: [Equation 3] 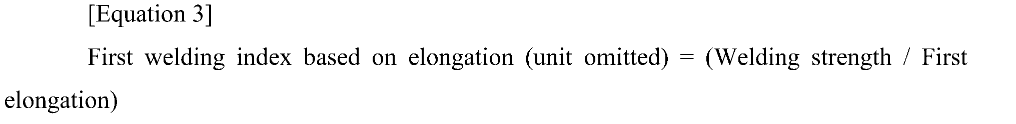 First welding index based on elongation (unit omitted) = (Welding strength / First elongation) [Equation 4] 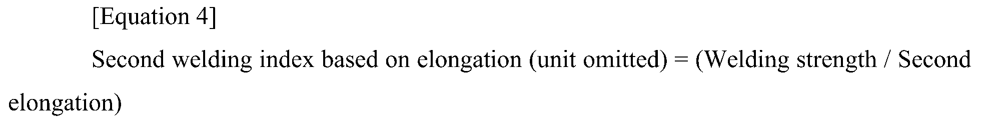 Second welding index based on elongation (unit omitted) = (Welding strength / Second elongation)

Here, the welding strength in Equations 3 and 4 is based on a 30-stack standard.

### Experimental Example 6 - Evaluation of interfacial defects after welding

For each of the samples welded with the lead tab in Experimental Example 2, the interface of the welded region was observed using an optical microscope. The evaluation was conducted according to the following criteria, and the results are shown in Table 2 below.
- ⊚: No cross-sectional discoloration and no traces of oxidation, and the interface is uniformly formed.
- Δ: No cross-sectional discoloration and no traces of oxidation, but a part of the interface is non-uniformly formed.
- ×: Cross-sectional discoloration and/or traces of oxidation are observed.

### Experimental Example 7 - Fracture evaluation

An active material slurry was applied to each copper foil manufactured in Examples 1 to 3 and Comparative Examples 1 to 3. The active material slurry was mixed with 2 parts by weight of styrene-butadiene rubber (SBR) and 2 parts by weight of carboxymethyl cellulose (CMC) with respect to 100 parts by weight of graphite. The active material slurry was uniformly applied onto the copper foil in a roll-to-roll method and in the Machine Direction (MD), and then dried. The coating amount of the active material slurry was about 16 mg/cm², and its thickness was about 100 µm. After the active material slurry was dried, a roll-press process was performed under the conditions of a roll gap of 6 µm, a speed of 1 m/min, a linear pressure of 1,000 kgf/cm, and a pressure of 2,500 kg, to form an active material layer having a density of about 1.5 g/cm³. Next, a negative electrode in which the lead tab was welded onto the copper foil was manufactured by the same process as in Experimental Example 2. For each negative electrode, a lithium manganese aluminum-based active material was used as a counter electrode (positive electrode), a polypropylene sheet with a thickness of 0.1 mm was used as a separator, and an electrolyte solution, prepared by dissolving 1 M of LiPF₆ in a solvent in which ethylene carbonate and ethyl methyl carbonate were mixed in a volume ratio of 3:7, was used to manufacture a secondary battery.

Each secondary battery was charged at a constant current of 0.1C until the voltage reached 0.01V, and a process of discharging at a constant current of 0.1C until the voltage reached 1.5V was performed 3 times to stabilize the cell. Next, each secondary battery was charged at a constant current of 0.5C until the voltage reached 0.01V, and a process of discharging at a constant current of 0.5C until the voltage reached 1.0V was performed 500 times. After 500 charge/discharge cycles were performed, whether a fracture occurred between the copper foil and the lead tab was observed. The evaluation was conducted according to the following criteria, and the results are shown in Table 2 below.
- Good: No lifting phenomenon and no fracture occurred between the copper foil and the lead tab.
- Poor: Lifting phenomenon or fracture occurred between the copper foil and the lead tab.

**[Table 2]**

| Classificat ion | Example 1 | Example 2 | Example 3 | Comparati ve Example 1 | Comparati ve Example 2 | Comparativ e Example 3 |
|---|---|---|---|---|---|---|
| Evaluation of doping elements | Appropriat e | Appropriat e | Appropriat e | Small | Small | Excessive |
| Welding strength (30stack)¹⁾ | 671.75 N/mm² (68.5 kgf/mm²) | 681.56N/m m² (69.5 kgf/mm²) | 560.94N/m m² (57.2 kgf/mm²) | 447.18N/m m² (45.6 kgf/mm²) | 453.07N/m m² (46.2 kgf/mm²) | 809.05N/m m² (82.5 kgf/mm²) |
| Welding strength (50stack) ¹⁾ | 920.84N/m m² (93.9 kgf/mm²) | 880.64N/m m² (89.8 kgf/mm²) | 801.2N/m m² (81.7 kgf/mm²) | 721.77N/m m² (73.6 kgf/mm²) | 733.54N/m m² (74.8 kgf/mm²) | 1083.63N/ mm² (110.5 kgf/mm²) |
| First tensile strength¹⁾ | 500.14N/m m² (51 kgf/mm²) | 628.61N/m m² (64.1 kgf/mm² | 432.47N/m m² (44.1 kgf/mm²) | 416.78N/m m² (42.5 kgf/mm²) | 525.64N/m m² (53.6 kgf/mm²) | 521.71N/m m² (53.2 kgf/mm²) |
| Second tensile strength¹⁾ | 489.35N/m m² (49.9 kgf/mm²) | 617.82N/m m² (63 kgf/mm²) | 379.52N/m m² (38.7 kgf/mm²) | 414.82N/m m² (42.3 kgf/mm²) | 524.66N/m m² (53.3 kgf/mm²) | 512.89N/m m² (52.3 kgf/mm²) |
| First elongation | 3.7 % | 5.3 % | 7.5 % | 6.4 % | 6.1 % | 3.2 % |
| second elongation | 4 % | 4.9 % | 8.8 % | 7.6 % | 6.8 % | 3.5 % |
| First welding efficiency | 134.3 % | 108.4 % | 129.7 % | 107.3 % | 86.2 % | 155.1 % |
| Second welding efficiency | 137.3 % | 110.3 % | 147.8 % | 107.8 % | 86.7 % | 157.7 % |
| Welding index based on first elongation | 18.5 | 13.1 | 7.6 | 7.1 | 7.6 | 25.8 |
| Welding index based on second elongation | 17.1 | 14.2 | 6.5 | 6.0 | 6.8 | 23.6 |
| Evaluation of interfacial defects after welding | ⊚ | ⊚ | ⊚ | Δ | Δ | × |
| Fracture evaluation | Good | Good | Good | Poor | Poor | Good |
| 1) The unit kgf/mm² was converted to the corresponding SI unit N/mm² by multiplying 9.8 N/kgf. | | | | | | |

As shown in Tables 1 and 2, the copper foils of Examples 1 to 3 are doped with at least one element selected from nitrogen and sulfur, and meet a welding strength range of 490.3 N/mm²(50 kgf/mm²) to 784.5 N/mm²(80 kgf/mm²) based on a 30-stack copper foil. From this, it was confirmed that the mechanical properties of the copper foil remained stable at room and high temperatures, no interfacial defects were generated after welding, and the bonding reliability and durability of the welded part were enhanced.

A copper foil according to the present disclosure includes a copper layer doped with at least one element selected from nitrogen and sulfur, and meets a welding strength range of 490.3 N/mm²(50 kgf/mm²) to 784.5 N/mm²(80 kgf/mm²) between a copper layer stack and a lead tab. As a result, the mechanical properties of the copper foil are stably maintained at room temperature and high temperatures, and local stress concentration in the welded part is relieved, so that the occurrence of defects such as cracks, peeling, or voids in the welded cross-section can be suppressed. In addition, due to the doping with nitrogen and/or sulfur elements, copper crystals can be stabilized and electron transport characteristics can be improved, so that a stable electrical connection quality can be secured without an excessive increase in welding resistance. As a result, the bonding reliability and durability of the welded part can be improved, so that the structural stability of the electrode terminal part can be maintained even under repeated charge/discharge conditions.

### [Description of Symbols]

10: copper foil
11: copper layer
12: protective layer
15: negative electrode active material layer
20: positive electrode current collector
25: positive electrode active material layer
30: electrolytic bath
40: electrolyte solution
50: positive electrode plate
51: first positive electrode plate
52: second positive electrode plate
60: rotating cathode drum
70: anticorrosion solution
100: negative electrode
200: positive electrode
300: electrolyte
400: separator
1000: secondary battery

## Claims

1. A copper foil, comprising a copper layer doped with at least one element selected from nitrogen and sulfur,
wherein the copper foil has a welding strength of 50 kgf/mm² (490.3 N/mm²) to 80 kgf/mm² (784.5 N/mm²), measured according to Measurement Method 1 below:
[Measurement Method 1]
1) A copper layer stack in which 30 copper layers are stacked is prepared.
2) The copper layer stack and a lead tab are welded according to laser welding conditions below:
- Power: 2,500 W
- Irradiation length: 39 mm
- Irradiation interval: 1 mm
- Irradiation time: 4 ms
3) For the welded part between the copper layer stack and the lead tab, welding strength is measured under conditions of a length of 50 mm, a width of 12.7 mm, and a test speed of 50 mm/min using a universal testing machine from Instron Corp., according to IPC-TM-650 standard.

2. The copper foil according to claim 1, wherein the copper foil has a welding strength of 75 kgf/mm² (735.5 N/mm²) to 100 kgf/mm²(980.7 N/mm²), measured according to Measurement Method 2 below:
[Measurement Method 2]
1) A copper layer stack in which 50 copper layers are stacked is prepared.
2) A welding strength is measured according to steps 2) and 3) of Measurement Method 1.

3. The copper foil according to claim 1 or 2, wherein a total content of the doping element is 20 ppm to 80 ppm.

4. The copper foil according to any one of the preceding claims, wherein a difference between a first tensile strength at room temperature and a second tensile strength after heat treatment at 190 °C for 10 minutes according to IPC-TM-650 is 6 kgf/mm² (58.8 N/mm²) or less, wherein the first tensile strength is 40 kgf/mm² (392.3 N/mm²) to 70 kgf/mm² (686.5 N/mm²).

5. The copper foil according to claim 4, wherein the copper foil has a first welding efficiency of 100 % to 140 %, calculated according to Equation 1 below: [Equation 1] $First welding efficiency = \left(Welding strength/First tensile strength\right) \times 100$

6. The copper foil according to claim 4 or 5, wherein the copper foil has a second welding efficiency of 110 % to 160 %, calculated according to Equation 2 below: [Equation 2] $Second welding efficiency = \left(Welding strength/Second tensile strength\right) \times 100$

7. The copper foil according to any one of the preceding claims, wherein, when the copper foil has a thickness of 6 µm ± 4 µm, a first elongation at room temperature according to IPC-TM-650 is 2 % to 15 %, and a second elongation after heat treatment at 190 °C for 10 minutes is 3 % to 20 %.

8. The copper foil according to claim 7, wherein the copper foil has a first welding index based on elongation of 7 to 20, calculated according to Equation 3 below: [Equation 3] 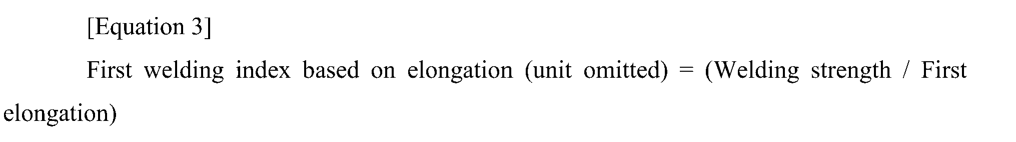 First welding index based on elongation (unit omitted) = (Welding strength / First elongation)

9. The copper foil according to claim 7 or 8, wherein the copper foil has a second welding index based on elongation of 6 to 18, calculated according to Equation 4 below: [Equation 4] 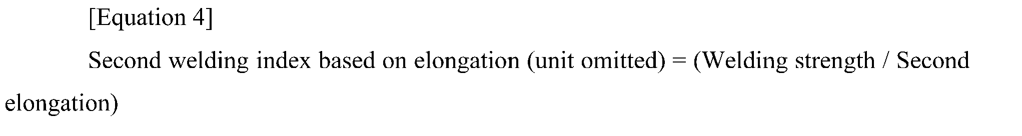 Second welding index based on elongation (unit omitted) = (Welding strength / Second elongation)

10. The copper foil according to any one of the preceding claims, further comprising a protective layer formed on at least one surface of the copper layer,
wherein the protective layer comprises at least one of a chromium compound, a silane compound, and a nitrogen compound.

11. An electrode, comprising:
a current collector comprising a copper foil according to any one of the preceding claims; and
an active material layer formed on at least one surface of the current collector.

12. A secondary battery, comprising:
a negative electrode according to claim 11;
a positive electrode;
an electrolyte; and
a separator interposed between the negative electrode and the positive electrode.
